# EUROPÄISCHE PATENTSCHRIFT

(11) **EP 2 248 137 B1**
(45) Veröffentlichungstag und Bekanntmachung des Hinweises auf die Patenterteilung: **07.08.2019**
(21) Anmeldenummer: 09711706.3
(22) Anmeldetag: 19.02.2009
(51) Int. Cl.: H01F 27/34, H01F 27/38, H01F 38/02, H01F 3/14, H01F 38/30

(54) **WANDLERANORDNUNG**
CONVERTER ARRANGEMENT
ENSEMBLE TRANSFORMATEUR

(30) Priorität: 22.02.2008 AT 3022008
(43) Veröffentlichungstag der Anmeldung: 10.11.2010
(73) Patentinhaber: Egston System Electronics Eggenburg GmbH, 3730 Eggenburg (AT)
(72) Erfinder: SPURNY, Lubomir, 59101 Zdar Nad Saz (CZ)
(74) Vertreter: Gibler & Poth Patentanwälte KG
(86) Internationale Anmeldenummer: PCT/AT2009/000067
(87) Internationale Veröffentlichungsnummer: WO 2009/103102

(56) Entgegenhaltungen:
- WO-A-2004/040600
- GB-A- 2 033 163
- US-A- 1 599 570
- US-A- 4 454 557
- US-A- 5 726 846

## Beschreibung

Die Erfindung betrifft eine Wandleranordnung gemäß dem Oberbegriff des Patentanspruches 1.

Wandleranordnungen zur Erzeugung einer elektrischen Spannung für einen elektrischen Schaltkreis aus dem Feld eines stromdurchflossenen Primärleiters sind bekannt, wobei eine Wicklung um ein Kernelement gewickelt ist, und wobei das Kernelement eine Durchführung für den Primärleiter aufweist. Der stromdurchflossene Primärleiter erzeugt ein elektromagnetisches Feld, wobei die Feldstärke des elektromagnetischen Feldes mit steigender Stromstärke ansteigt. Eine Wicklung ist um einen Magnetkreis im elektromagnetischen Feld um den Primärleiter angeordnet, womit dem Feld Energie entnommen werden kann, wobei an Anschlüssen der Wandleranordnung eine elektrische Spannung anliegt. Die elektrische Spannung kann in dem mit den Anschlüssen wirkverbundenen Schaltkreis als Versorgerspannung, als Messspannung und/oder als Steuerspannung verwendet werden.

Die WO 2004/040 600 A1 offenbart eine Wandleranordnung welche einen Kondensator zur Ausbildung eines Resonanzkreises umfasst und welcher zur Energieversorgung beim Elektroschweißen vorgesehen ist.

Die US 5 726 846 A beschreibt ein Schaltgerät umfassend wenigstens eine Wandleranordnung zur Spannungsversorgung des Schaltgeräts.

Die US 4 454 557 A behandelt eine Wandleranordnung zur Erzeugung einer Messspannung, welche Messspannung zur Erweiterung des Messbereichs logarithmischen ansteigt mit steigendem Strom im Primärleiter.

Die GB 2 033 163 A offenbart eine Wandleranordnung mit einer Primärwicklung und mit einer Sekundärwicklung.

Die US 1 599 470 A beschreibt eine Wandleranordnung mit einem umfänglich geschlossenen ersten Kern, an welchem ein zweiter C-förmiger Kern mittels Luftspalt angekoppelt ist.

Gemäß einer beschriebenen Ausführungsform sind auf dem ersten Kernelement und auf dem zweiten Kernelement Spulenteile ein und derselben Spule angeordnet, mit gegenläufigen Wickelrichtungen.

Nachteilig daran ist, dass bei einer variierenden elektrischen Stromstärke des Stromflusses im Primärleiter die elektrische Spannung ebenfalls variiert, wobei insbesondere bei Nachteilig daran ist, dass bei einer variierenden elektrischen Stromstärke des Stromflusses im Primärleiter die elektrische Spannung ebenfalls variiert, wobei insbesondere bei Kurzschlussströmen im stromdurchflossenen Primärleiter sehr hohe elektrische Spannungen auftreten können, wobei dies zu Beschädigungen des elektrischen Schaltkreises führen kann.

Aufgabe der Erfindung ist es daher eine Wandleranordnung der eingangs genannten Art anzugeben, mit welcher die genannten Nachteile vermieden werden können, und mit welcher aus dem Feld eines stromdurchflossenen Primärleiters eine elektrische Spannung gewonnen werden kann, wobei die elektrische Spannung ohne weitere aufwendige schaltungstechmsche Maßnahmen zur Speisung und/oder zur Versorgung elektrischer und/oder elektronischer Schaltkreise geeignet ist, mit welcher die maximale elektrische Spannung der Wandleranordnung vorbestimmbar begrenzt und über einen weiten Bereich der Stromstärke im Wesentlichen konstant gehalten werden kann.

Erfindungsgemäß wird dies durch die Merkmale des Patentanspruches 1 erreicht.

Dadurch ergibt sich der Vorteil, dass die elektrische Spannung unterhalb einer vorgebbaren Stromstärke in dem Primärleiter stetig proportional mit steigender Stromstärke, insbesondere steil, ansteigt und dass die elektrische Spannung nach oben begrenzt ausgebildet ist und insbesondere nicht über einen den elektrischen und/oder elektronischen Schaltkreis gefährdenden oder schädigenden Betrag der Spannung ansteigt. Insbesondere kann dabei die Kurzschlussströmen im stromdurchflossenen Primärleiter sehr hohe elektrische Spannungen auftreten können, wobei dies zu Beschädigungen des elektrischen Schaltkreises führen kann.

Aufgabe der Erfindung ist es daher eine Wandleranordnung der eingangs genannten Art anzugeben, mit welcher die genannten Nachteile vermieden werden können, und mit welcher aus dem Feld eines stromdurchflossenen Primärleiters eine elektrische Spannung gewonnen werden kann, wobei die elektrische Spannung ohne weitere aufwendige schaltungstechnische Maßnahmen zur Speisung und/oder zur Versorgung elektrischer und/oder elektronischer Schaltkreise geeignet ist, mit welcher die maximale elektrische Spannung der Wandleranordnung vorbestimmbar begrenzt und über einen weiten Bereich der Stromstärke im Wesentlichen konstant gehalten werden kann.

Erfindungsgemäß wird dies durch die Merkmale des Patentanspruches 1 erreicht.

Dadurch ergibt sich der Vorteil, dass die elektrische Spannung unterhalb einer vorgebbaren Stromstärke in dem Primärleiter stetig proportional mit steigender Stromstärke, insbesondere steil, ansteigt und dass die elektrische Spannung nach oben begrenzt ausgebildet ist und insbesondere nicht über einen den elektrischen und/oder elektronischen Schaltkreis gefährdenden oder schädigenden Betrag der Spannung ansteigt. Insbesondere kann dabei die elektrische Spannung über weite Stromstärkenbereiche im Wesentlichen konstant sein, wobei der elektrische und/oder elektronische Schaltkreis sicher und zuverlässig mit elektrischer Spannung versorgbar ist und sicher und zuverlässig über weite Stromstärkenbereiche betrieben werden kann.

Vorteilhaft dabei ist, dass die Wandleranordnung eine elektrische Maximalspannung an den Anschlüssen aufweisen kann, welche bei keiner, insbesondere belieb hohen, Stromstärke im Primärleiter überschritten wird, wobei die elektrische Maximalspannung in einem vorgebbaren Verhältnis zur Nennspannung stehen kann. Insbesondere kann die Maximalspannung dem 1,1fachem bis 5fachem, bevorzugt dem 1,2fachen bis 3fachen, besonders bevorzugt dem 1,3fachen bis 2fachen, der Nennspannung entsprechen.

Vorteilhaft dabei ist, dass auch bei Kurschlussströmen im Primärleiter die Spannung begrenzt ist und der von der Spannung versorgte elektrische Schaltkreis nicht übermäßig belastet wird.

Dadurch kann der elektrische Schaltkreis, insbesondere ohne aufwendige Spannungsbegrenzungsschaltungen, zuverlässig über einen weiten Bereich der Stromstärke im Primärleiter betrieben werden.

Die Erfindung betrifft auch einen elektrischen und/oder elektronischen Schaltkreis gemäß Anspruch 14, welcher von der erfindungsgemäßen Wandleranordnung spannungswirkverbunden, insbesondere spannungsversorgt, ist. Dadurch ergibt sich der Vorteil, dass das Schaltgerät einfach, kostengünstig und platzsparend ausgebildet sein kann. Insbesondere kann derart auf zusätzliche Sicherungsmaßnahmen zur Überspannungssicherung des elektrischen und/oder elektronischen Schaltkreis verzichtet werden.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 die Wandleranordnung einer ersten bevorzugten Ausführungsform in schematischer Darstellung im Aufriss und den Primärleiter geschnitten parallel zum Querschnitt;
Fig. 2 die Wandleranordnung einer zweiten bevorzugten Ausführungsform in schematischer Darstellung im Aufriss und den Primärleiter geschnitten parallel zum Querschnitt;
Fig. 3 die Wandleranordnung einer dritten bevorzugten Ausführungsform in schematischer Darstellung im Aufriss und den Primärleiter geschnitten parallel zum Querschnitt;
Fig. 4 die Wandleranordnung einer vierten bevorzugten Ausführungsform in schematischer Darstellung im Aufriss und den Primärleiter geschnitten parallel zum Querschnitt;
Fig. 5 die Wandleranordnung gemäß Fig. 4 geschnitten entlang der Linie A-A in schematischer Darstellung; und
Fig. 6 ein Spannungs-Stromdiagramm, in welchem schematisch eine Arbeitskurve einer - nicht dargestellten - herkömmlichen Wandleranordnung und zwei unterschiedliche Arbeitskurven unterschiedlicher bevorzugten Ausführungsformen der Wandleranordnung dargestellt sind.

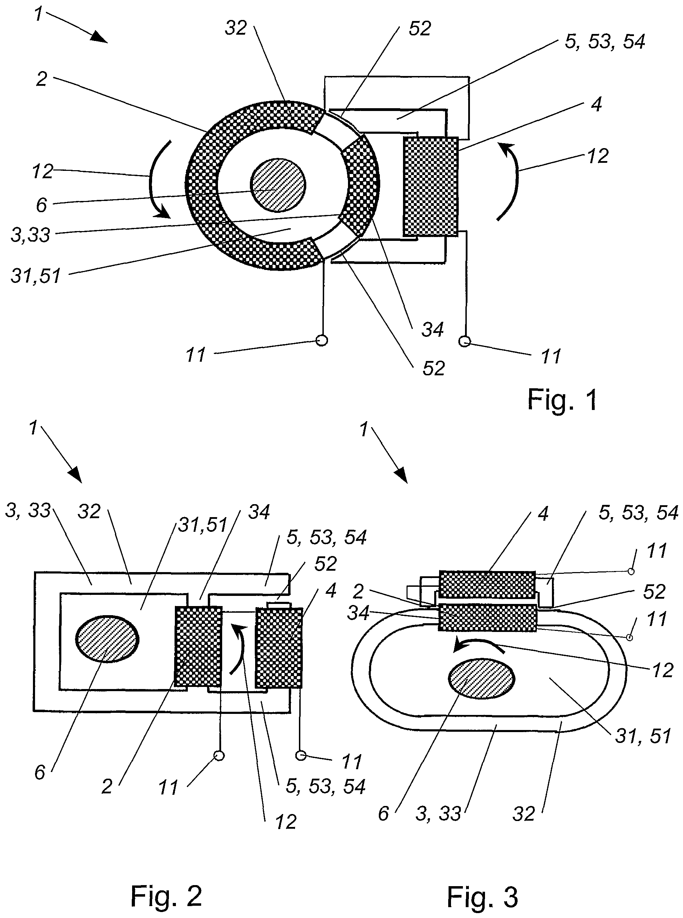

Die Fig. 1 bis 5 zeigen unterschiedliche bevorzugte Ausführungsformen einer Wandleranordnung 1 zur Erzeugung einer elektrischen Spannung für einen elektrischen und/oder elektronischen Schaltkreis aus dem Feld eines stromdurchflossenen Primärleiters 6, umfassend eine erste Wicklung 2 um einen ersten Magnetkreis 3, wobei der erste Magnetkreis 3 eine erste Durchführung 31 für den Primärleiter 6 aufweist, wobei zur Verhinderung von Überspannungen an Anschlüssen 11 der Wandleranordnung 1 vorgesehen ist, dass eine zweite Wicklung 4 um einen zweiten Magnetkreis 5 in Serie zu der ersten Wicklung 2 geschaltet ist, wobei der zweite Magnetkreis 5 eine zweite Durchführung 51 für den Primärleiter 6 aufweist, dass der erste Magnetkreis 3 luftspaltfrei ausgebildet ist, und dass der zweite Magnetkreis 5 wenigstens einen Luftspalt 52 umfasst.

Mittels der Wandleranordnung 1 können die eingangs genannten Vorteile und Wirkungen gewährleistet werden, wodurch sich der Vorteil ergibt, dass die elektrische Spannung unterhalb einer vorgebbaren Stromstärke in dem Primärleiter 6, insbesondere stetig proportional, mit steigender Stromstärke im Primärleiter 6, insbesondere steil, ansteigt und gleichzeitig, dass Spannung an den Anschlüssen 11 der Wandleranordnung auch bei hohen und höchsten Strömen im Primärleiter 6 nicht über einen vorbestimmbaren Betrag der Spannung, insbesondere über eine vorgebbare Maximalspannung 76, ansteigt.

Vorteilhaft dabei ist, dass auch bei Kurschlussströmen im Primärleiter 6, welche das 100fache, das 1000fache, das 10000fache oder das 100000fache einer Nennstromstärke im Normalbetrieb des Primärleiters 6 betragen können, die Spannung begrenzt ist, womit der von der Spannung versorgte elektrische und/oder elektronische Schaltkreis nicht übermäßig belastet wird. Dadurch kann der elektrische und/oder elektronische Schaltkreis, insbesondere ohne aufwendige Spannungsbegrenzungsschaltungen, zuverlässig bei stark variierenden Stromstärken, insbesondere um den Faktor 10 bis 100000, besonders um den Faktor 50 bis 15000, bevorzugt um den Faktor 200 bis 2000, variierende Stromstärken, im Primärleiter 6 betrieben werden. Dadurch kann gewährleistet werden, dass die Wandleranordnung 1 bereits bei kleinen Stromstärken im Primärleiter 6 eine zum Betrieb des elektrischen und/oder elektronischen Schaltkreises ausreichend hohe Spannung an den Anschlüssen 11 liefert und/oder dass die Nennstromstärke im Primärleiter 6 besonders gering ausgebildet sein kann.

Dadurch ergibt sich der Vorteil, dass die elektrische Spannung unterhalb einer vorgebbaren ersten Stromstärke 74 im Primärleiter 6 stetig proportional mit steigender Stromstärke, insbesondere steil, ansteigend ausgebildet sein kann, und dass die elektrische Spannung ab einer vorgebbaren zweiten Stromstärke 75 im Primärleiter 6 maximal geringfügig ansteigt, insbesondere im Wesentlichen konstant bleibt und/oder bei geringem negativem Anstieg kleiner wird, wobei die Spannung bei jeder Stromstärke im Primärleiter 6 kleiner als die vorgebbare Maximalspannung 76 ist. Die vorgebbare Maximalspannung 76 kann dabei insbesondere unter einem den elektrischen und/oder elektronischen Schaltkreis gefährdenden oder schädigenden Spannungsniveau gewählt werden, wobei der elektrische und/oder elektronische Schaltkreis sicher und zuverlässig mit elektrischer Spannung versorgbar ist und sicher und zuverlässig über weite Stromstärkenbereiche betrieben werden kann.

Bei der vorgebbaren Nennstromstärke der Stromstärke im Primärleiter 6, welche durch den Normalbetrieb der Wandleranordnung 1 bei einer normalen Stromstärke im Primärleiter 6 definiert ist, kann eine vorgebbare Nennspannung an den Anschlüssen 11 der Wandleranordnung 1 anliegen, welche unterhalb der elektrischen Maximalspannung 76 ist. Die maximal an den Anschlüssen 11 anliegende Maximalspannung 76 kann in einem vorgebbaren Verhältnis zur Nennspannung stehen. Insbesondere kann die Maximalspannung 76 dem 1,1fachem bis 5fachem, bevorzugt dem 1,2fachen bis 3fachen, besonders bevorzugt dem 1,3fachen bis 2fachen, der Nennspannung entsprechen.

Dieses Verhältnis von elektrischer Nennspannung zu elektrischer Maximalspannung 76 kann in vorteilhafter Weise mittels der Größe des im zweiten Magnetkreis 5 angeordneten Luftspaltes 52 und mittels dem Verhältnis einer ersten Windungszahl der ersten Wicklung 2 zu einer zweiten Windungszahl der zweiten Wicklung 4 vorbestimmbar gesteuert werden. Dabei kann insbesondere vorgesehen sein, dass der Luftspalt 52 zwischen 0,01mm und 0,5mm breit ausgebildet ist.

Dabei kann insbesondere vorgesehen sein, dass das Verhältnis der ersten Windungszahl der ersten Wicklung 2 zur zweiten Windungszahl der zweiten Wicklung 4 zwischen 2:1 und 1:2 beträgt.

Der erste Magnetkreis 3 umfasst wenigstens ein erstes Kernelement 33, welches erstes Kernelement 33 zum luftspaltfreien Umschließen des Primärleiters 6 ausgebildet ist. Der zweite Magnetkreis 5 umfasst ein zweites Kernelement 53, welches zweite Kernelement 53 zum luftspaltbehaftendem Umschließen des Primärleiters 6 ausgebildet ist. Dabei kann insbesondere vorgesehen sein, dass das zweite Kernelement 53 den Luftspalt 52 aufweist.

Vorteilhaft dabei ist, dass auch bei einem Kurschlussstrom im Primärleiter 6 die Spannung an den Anschlüssen 11 begrenzt ist, insbesondere höchstens gleich der vorgebbaren Maximalspannung 76 ist, wobei der mit den Anschlüssen 11 wirkverbundene elektrische und/oder elektronische Schaltkreis nicht übermäßig belastet wird. Dadurch kann der elektrische und/oder elektronische Schaltkreis, insbesondere ohne aufwendige Spannungsbegrenzungsschaltungen, zuverlässig und vor Überspannungen gesichert betrieben werden.

Der Primärleiter 6 ist insbesondere von einem als Wechselstrom ausgebildeten elektrischen Strom durchflossen. Der Wechselstrom weist insbesondere national oder international üblichen Frequenzen, beispielsweise 16,6Hz, 50Hz oder 60Hz, auf, wobei sich auch das Feld, insbesondere das Vektorfeld, des es stromdurchflossenen Primärleiters 6 mit derselben Frequenz periodisch ändert. Dabei kann der Wechselstrom als jede Art von Wechselstrom, beispielsweise rechteckig oder sägezahnförmig ausgebildet sein, wobei die Angabe der Stromstärke des Wechselstromes jener Stromstärke eines Gleichstromes mit gleicher Wirkung entspricht. Insbesondere kann der Wechselstrom sinusförmig ausgebildet sein. Der Begriff Stromstärke bezeichnet hierbei die Stärke des elektrischen Stroms und wird in A gemessen.

Die Wandleranordnung 1 ist - sofern der Primärleiter 6 stromdurchflossen ist - zur Umwandlung der vorhandenen Energie im elektromagnetischen Feld um den elektrischen Primärleiter 6 geeignet und/oder vorgesehen. Dabei ist die Stromstärke im Primärleiter 6 die Eingangsgröße der Wandleranordnung 1 und die Spannung, welche an, insbesondere zwischen, den beiden Anschlüssen 11 der Wandleranordnung 1 anliegt, die Ausgangsgröße der Wandleranordnung 1, wobei die Wandleranordnung 1 die Wandlung einer durch den Stromfluss im Primärleiter 6 bewirkten Energie eines um den Primärleiter 6 ausgebildeten Feldes in die Spannung bewirkt. Diese Umwandlung zwischen der Stromstärke in die Spannung kann insbesondere einer eindeutig vorgebbaren Übertragungsfunktion der Wandleranordnung 1 folgen, wobei die Übertragungsfunktion der Wandleranordnung 1 als Arbeitskurve 7 der Wandleranordnung 1 in Tabellenform, in Form eines Formelzusammenhanges und/oder graphisch angegeben werden kann.

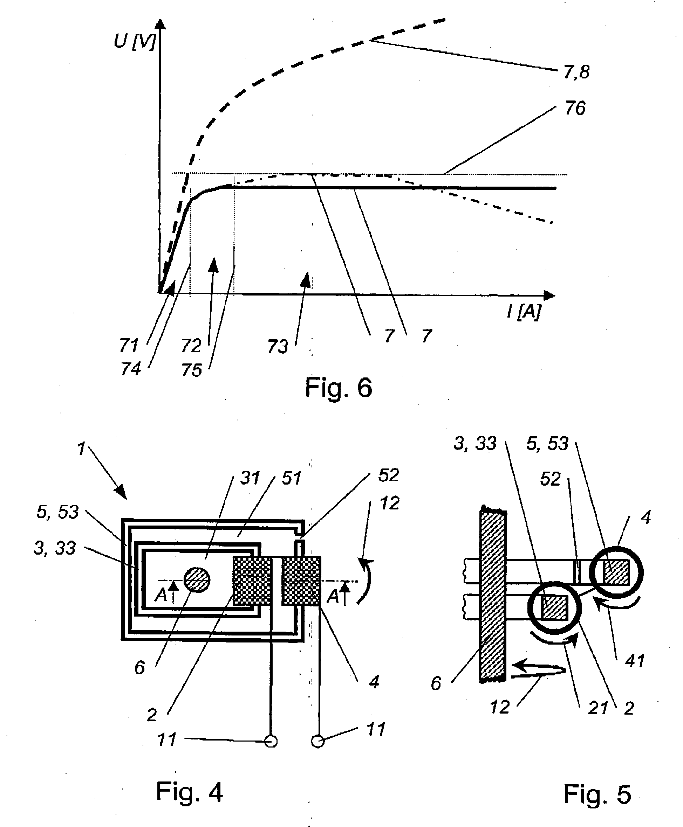

Die Arbeitskurve 7 kann dabei insbesondere in etwa gemäß der in Fig. 6 als durchgezogene Linie dargestellten Arbeitskurve 7 ausgebildet sein, wenn die erste Windungszahl und die zweite Windungszahl in etwa gleich sind. In etwa gleich sind die erste Windungszahl und die zweite Windungszahl, wenn die erste Windungszahl plus/minus 20% der zweiten Windungszahl ist, wobei die gewährleistet werden kann, dass die Maximalspannung 76 nicht überschritten wird. Im Wesentlichen gleich sind die erste Windungszahl und die zweite Windungszahl, wenn die erste Windungszahl plus/minus 5% der zweiten Windungszahl ist, wobei besonders zuverlässig gewährleistet werden kann, dass die Maximalspannung 76 nicht überschritten wird.

Die Arbeitskurve 7 kann insbesondere in etwa gemäß der in Fig. 6 als strichpunktierte Linie dargestellten Arbeitskurve 7 ausgebildet sein, wenn die erste Windungszahl mindestens 20% geringer als die zweite Windungszahl ist. In diesem Fall kann zuverlässig gewährleistet werden, dass die an den Anschlüssen 11 der Wandleranordnung 1 anliegende elektrische Spannung ab und über einer vorbestimmbaren Stromstärke im Wesentlichen stetig sinkt.

In der ersten Wicklung 2 ist eine erste Wickelspannung und in der zweiten Wicklung 4 eine zweite Wickelspannung ausbildbar, wobei bei einem vorgebbaren Stromfluss durch den Primärleiter 6 die erste Wickelspannung und die zweite Wickelspannung zur teilweisen Kompensierung derart ausgebildet sind, dass - in Stromflussrichtung zwischen den beiden Kontakten 11 gesehen - die erste Wickelspannung und die zweite Wickelspannung einander entgegenwirken, also dass - in einem vorbestimmbaren elektrischen Umlaufsinn - die erste Wickelspannung positiv ist und dabei die zweite Wickelspannung negativ ist. Die zwischen den beiden Ausgangsklemmen 11 anliegende elektrische Spannung ist dabei die Summe aus der positiven ersten Wickelspannung und der negativen zweiten Wickelspannung und der Betrag der elektrischen Spannung ist - sofern die anliegende Spannung ungleich Null ist - stets kleiner als jeweils der Betrag der ersten Wickelspannung bzw. der Betrag der zweiten Wickelspannung. Da diese zur Versorgung des elektrischen und/oder elektronischen Schaltkreises vorgesehene Spannung als Summenspannung der ersten Wickelspannung und der die zweiten Wickelspannung ausgebildet ist und zwischen den Anschlussklemmen 11 anliegt, kann diese elektrische Spannung als Summenspannung, als Gesamtspannung und/oder als Ausgangsspannung der Wandleranordnung 1 bezeichnet werden. Dabei können die erste Wickelspannung und die zweite Wickelspannung mit steigender Stromstärke im Primärleiter stetig ansteigen, wobei diese beiden Wickelspannungen in der Serienschaltung einander entgegenwirken und sich derart - zumindest teilweise - kompensieren. Dadurch ergibt sich der Vorteil, dass sich die Arbeitskurve genau und den Anforderungen entsprechend individuell anpassen lässt, wobei die elektrische Spannung insbesondere auch bei sehr hohen Stromstärken im Primärleiter 6, beispielsweise bei in etwa 3000A, insbesondere bei in etwa 30000A, bevorzugt auch bei 300000A und darüber, kleiner oder gleich der für den elektrischen und/oder elektronischen Schaltkreis ungefährlichen Maximalspannung 76 ausgebildet sein kann.

Dabei kann die erste Wickelspannung und/oder die zweite Wickelspannung über den vorgebbaren Wert der Maximalspannung 76 ansteigen, wobei die erste Wicklung 2 und/oder die zweite Wicklung 4 insbesondere auf diesen Anstieg der ersten Wickelspannung bzw. der zweiten Wickelspannung ausgelegt sind. Dadurch kann gewährleistet werden, dass die erste Wicklung 2 und/oder die zweite Wicklung 4 auch bei hohen Stromstärken im Primärleiter 6 nicht beschädigt werden und dass die Wandleranordnung 1 über einen großen Stromstärkenbereich, beispielsweise zwischen OA und 300000A, insbesondere zwischen OA und 50000A, bevorzugt zwischen OA und 10000A, zerstörungsfrei verwendet werden kann.

Die Fig. 1 zeigt die Wandleranordnung 1 einer bevorzugten ersten Ausführungsform. In dieser bevorzugten Ausführungsform kann der erste Magnetkreis 3 im Wesentlichen als ein torusförmiges erstes Kernelement 33 ausgebildet sein, wobei die erste Durchführung 31 zur Durchführung des Primärleiters 6 im Zentrum des ersten Kernelementes 33 ausgebildet ist.

Die erste Wicklung 2 kann sich in etwa über drei Viertel eines um die erste Durchführung 31 umlaufenden Umfangs des ersten Kernelementes 33 erstrecken.

Das erste Kernelement 33 ist zum luftspaltfreien Umschließen des Primärleiters 6 ausgebildet.

Das erste Kernelement 33 kann insbesondere aus zumindest einem den magnetischen Widerstand senkenden ersten Werkstoff gefertigt sein und kann insbesondere Trafoblech, Reineisen, Ferrit, Walzblech und/oder Dynamoblech oder Kombinationen dieser Werkstoffe umfassen.

Der zweite Magnetkreis 5 umfasst wenigstens ein zweites Kernelement 53.

Das zweite Kernelement 53 kann - wie in der Fig. 1 dargestellt - bevorzugt als Teilsegment 54 zum Ansetzen an das erste Kernelement 33 ausgebildet sein. Dabei kann der zweite Magnetkreis 5 - wie in der bevorzugten ersten Ausführungsform dargestellt - einen Teilbereich 32 des ersten Kernelementes 33 und ein an das erste Kernelement 33 angesetzte Teilsegment 54 umfassen, wobei insbesondere zwischen dem ersten Kernelement 33 und dem Teilsegment 54 insbesondere zwei Luftspalte 52 ausgebildet sein können, wobei der zweite Magnetkreis 5 insbesondere zwei Luftspalte 52 vorbestimmbarer Breite aufweisen kann. Die zweite Wicklung 4 ist dabei um das als Teilsegment 54 ausgebildete zweite Kernelement 53 gewickelt. Dadurch kann die Wandleranordnung 1 sehr kompakt, bauraumschonend und kostengünstig gebaut werden.

Das erste Kernelement 33 umfasst zumindest ein Kernblech, welches insbesondere als Schnittbandkern ausgebildet ist. Dabei stimmt die magnetische Vorzugsrichtung des Kernbleches, insbesondere des Schnittbandkerns, mit der Umlaufrichtung des ersten Kernelementes 33 um den ersten Durchbruch 31 überein. Dadurch kann ein besonders hoher Wirkungsgrad des ersten Magnetkreises 3 gewährleistet sein.

Bevorzugt kann vorgesehen sein, dass das zweite Kernelement 53 zumindest ein Kernblech umfasst, welches insbesondere als Schnittbandkern ausgebildet ist. Dabei kann die magnetische Vorzugsrichtung des Kernbleches, insbesondere des Schnittbandkerns, mit der Umlaufrichtung des zweiten Kernelementes 53 um den zweiten Durchbruch 51 übereinstimmen. Dadurch kann ein besonders hoher Wirkungsgrad des zweiten Magnetkreises 5 gewährleistet sein.

Insbesondere kann in vorteilhafter Weiterbildung vorgesehen sein, dass das erste Kernelement 33 und/oder das zweite Kernelement 53 homogen, insbesondere homogen in Umlaufrichtung um die erste Durchführung 31 bzw. die zweite Durchführung 51, ausgebildet ist. Dabei kann das erste Kernelement 33 bevorzugt mehrere Lagen eines Trafoblechs umfassen und kann die Feldlinien des elektromagnetischen Feldes effizient bündeln und einen hohen Wirkungsgrad der ersten Wicklung 2 gewährleisten. Durch die im Wesentlichen torusförmige Geometrie, also die runde Ausgestaltung des ersten Kernelementes 33 entlang des Umfangs um die erste Durchführung 31, können Streuverluste gering sein und der erste Magnetkreis 3 kann mit hohem Wirkungsgrad ausgebildet sein. Die Querschnittsfläche des ersten Kernelementes 3, welche im Wesentlichen normal zur Umfangsrichtung des ersten Kernelementes 33 angeordnet ist, kann kreisrund, quadratisch, mehreckig, insbesondere viereckig oder sechseckig und/oder oval sowie voll oder hohl ausgebildet sein. Die Querschnittsfläche des zweiten Kernelementes 53, welche im Wesentlichen normal zur Umfangsrichtung des zweiten Kernelementes 53 angeordnet ist, kann ebenso kreisrund, quadratisch, mehreckig, insbesondere viereckig oder sechseckig und/oder oval sowie voll oder hohl ausgebildet sein.

Bei einer weiteren - in den Fig. 4 und 5 schematisch dargestellten - vorteilhaften Ausführungsform kann das zweite Kernelement 53 zum zumindest bereichsweisen Umschließen des Primärleiters 6 ausgebildet sein. Dadurch können der erste Magnetkreis 3 und der zweite Magnetkreis 5 unabhängig voneinander im Bereich des Primärleiters montiert und demontiert werden, womit die Montage und die Wartung der Wandleranordnung 1 vereinfacht werden kann.

Bei einer alternativen - nicht dargestellten - Ausführungsform kann vorgesehen sein, dass das erste Kernelement 33 im Wesentlichen entlang des Umfangs vollständig bewickelt ist. Dadurch kann der Wirkungsgrad des ersten Magnetkreises 3 sowie der ersten Wicklung 2 besonders hoch ausgebildet sein.

Ebenso kann der Leiter der Wicklungen 2, 4 einen besonders großen Querschnitt aufweisen. Dadurch kann der Eigenwiderstand der ersten Wicklung 2 und/oder der zweiten Wicklung 4, insbesondere der gesamten Wandleranordnung 1, niedrig sein.

Die Fig. 2 zeigt eine zweite bevorzugte Ausführungsform der Wandleranordnung 1. Der erste Magnetkreis 3 und der zweite Magnetkreis 5 sind dabei bevorzugt aus einem oder mehreren gestanzten Magnetblechen geformt, welche in Richtung der Längserstreckung des Primärleiters 6 mehrlagig übereinander liegen können. Der erste Magnetkreis 3 ist hiebei ohne Luftspalt 52 ausgebildet. Der zweite Magnetkreis weist hiebei genau einen Luftspalt 52 vorbestimmter Breite auf. Die erste Wicklung 2 und die zweite Wicklung 4 sind hiebei elektrisch gegenläufig, also gegeneinander, in Serie geschaltet.

Die Fig. 3 zeigt eine dritte bevorzugte Ausführungsform der Wandleranordnung 1. Der erste Magnetkreis 3 ist wiederum aus dem ersten Kernelement 33 gebildet. Der zweite Magnetkreis

Bei der ersten bevorzugten Ausfuhrungsform, der zweiten bevorzugten Ausführungsform und der dritten bevorzugten Ausführungsform der Wandleranordnung 1 ist bevorzugt vorgesehen, dass der zweite Magnetkreis 5 einen Teilbereich 32 des ersten Magnetkreises 3 und ein mit dem Teilbereich 32 des ersten Magnetkreises 3 wirkverbundenes Teilsegment 54 umfasst, und dass die erste Durchführung 31 und die zweite Durchführung 51 als eine Durchführung für den Primärleiter 6 ausgebildet sind. Dabei fließt im Teilbereich 32 des ersten Magnetkreises 3 sowohl der magnetische Fluss des ersten Magnetkreises 3 als auch der magnetische Fluss des zweiten Magnetkreises 5. In einem weiteren Teilbereich 34 des ersten Magnetkreises 3, welcher insbesondere parallel zum Teilstück 54 angeordnet sein kann, fließt lediglich der magnetische Fluss des ersten Magnetkreises 3. Dabei kann die Wandleranordnung 1 besonders kompakt uns besonders bauraumschonend ausgebildet sein.

Bevorzugt kann dabei - wie in der Fig. 1 dargestellt - die erste Wicklung 2 mehrteilig gewickelt sein, wobei insbesondere die erste Wicklung teilweise um den Teilbereich 32 und teilweise um den weiteren Teilbereich 34 gewickelt sein kann. Dadurch kann der 5 ist aus dem Teilstück 54 und einem Großteil des ersten Kernelementes 33 ausgebildet. Die um das Kernelement 33 gewickelte erste Wicklung 2 und die um das Teilstück 54 gewickelte zweite Wicklung 4 sind elektrisch in Serie geschaltet.

Bei der ersten bevorzugten Ausführungsform, der zweiten bevorzugten Ausführungsform und der dritten bevorzugten Ausführungsform der Wandleranordnung 1 ist bevorzugt vorgesehen, dass der zweite Magnetkreis 5 einen Teilbereich 32 des ersten Magnetkreises 3 und ein mit dem Teilbereich 32 des ersten Magnetkreises 3 wirkverbundenes Teilsegment 54 umfasst, und dass die erste Durchführung 31 und die zweite Durchführung 51 als eine Durchführung für den Primärleiter 6 ausgebildet sind. Dabei fließt im Teilbereich 32 des ersten Magnetkreises 3 sowohl der magnetische Fluss des ersten Magnetkreises 3 als auch der magnetische Fluss des zweiten Magnetkreises 5. In einem weiteren Teilbereich 34 des ersten Magnetkreises 3, welche insbesondere parallel zum Teilstück 54 angeordnet sein kann, lediglich der magnetische Fluss des ersten Magnetkreises 3 fließt. Dabei kann die Wandleranordnung 1 besonders kompakt uns besonders bauraumschonend ausgebildet sein.

Bevorzugt kann dabei - wie in der Fig. 1 dargestellt - die erste Wicklung 2 mehrteilig gewickelt sein, wobei insbesondere die erste Wicklung teilweise um den Teilbereich 32 und teilweise um den weiteren Teilbereich 34 gewickelt sein kann. Dadurch kann der Wirkungsgrad der ersten Wicklung und des ersten Magnetkreises 3 besonders hoch ausgebildet sein. Mehrteiliges Wickeln bedeutet hiebei, dass die Windungen der jeweiligen Wicklung, also der ersten Wicklung 2 und/oder der zweiten Wicklung 4, nicht gänzlich unmittelbar aufeinanderfolgend gewickelt sind, sondern vielmehr - entlang des Wicklungsdrahtes gesehen - nach einer vorbestimmbaren Anzahl erster Windungen der Wicklungsdraht abschnittsweise ungewickelt geführt, dann eine vorbestimmbare Anzahl wenigstens einer weiterer Windungen gewickelt werden.

Besonders vorteilhaft hat sich dabei erwiesen, wenn - in Wickelrichtung gesehen - zuerst die erste Anzahl Windungen der ersten Wicklung 2 gewickelt werden, anschließend der Wicklungsdraht zum Wickeln der zweiten Wicklung 4 geführt wird, anschließend die zweite Wicklung 4 gewickelt wird, anschließend der Wicklungsdraht zum Wickeln einer zweiten Anzahl von Windungen der ersten Wicklung 2 geführt wird und dass die zweite Anzahl von Windungen der ersten Wicklung 2 gewickelt wird. Die Anzahl der Windungen der ersten Wicklung 2 entspricht dabei der Summe der ersten Anzahl und der zweiten Anzahl, wobei die erste Anzahl und die zweite Anzahl insbesondere in etwa gleich sein können. Dabei ist die erste Wicklung 2 zweiteilig gewickelt und die zweite Wicklung 4 einteilig gewickelt und die zweite Wicklung 4 ist - in Wickelrichtung des Wicklungsdrahtes gesehen - zwischen dem ersten Teil der ersten Wicklung 2 und zwischen dem zweiten Teil der ersten Wicklung 2 angeordnet. Hiezu kann vorteilhafterweise vorgesehen sein, dass die erste Wicklung 2 wenigstens zweiteilig gewickelt ist und dass die zweite Wicklung 4 - in Wickelrichtung des Wicklungsdrahtes gesehen - innerhalb der ersten Wicklung 4 angeordnet ist. Besonders vorteilhaft dabei ist, dass sich die erste Wickelspannung dabei auf zwei - in Wickelrichtung des Wickeldrahtes gesehen - auf am Wickeldraht zueinander beabstandete Bereiche und dabei auf geringere Teilspannungen aufteilt wird. Die elektrische Spannung der Wandleranordnung 1 setzt sich dabei zusammen aus der Summe der positiven ersten der zwei Teilspannungen der ersten Wicklung 2, der negativen zweiten Wickelspannung und der zweiten der zwei Teilspannungen der ersten Wicklung 2. Vorteilhaft dabei ist, dass derart eine besonders hohe Kurzschlussfestigkeit der Wandleranordnung 1 und insbesondere der ersten Wicklung 2 gewährleistet werden kann.

Alternativ kann vorgesehen sein, dass die erste Wicklung 2 und/oder die zweite Wicklung 4 mehrteilig gewickelt ist. Dadurch kann individuell der zur Verfügung stehende Bauraum optimal genützt und mit der Wandleranordnung 1, insbesondere mit Wicklungsdraht, befüllt werden. Hiebei kann insbesondere vorgesehen sein, dass die erste Wicklung 2 dreiteilig gewickelt sein kann und einen ersten Teil der ersten Wicklung 2, einen zweiten Teil der ersten Wicklung 2 und einen dritten Teil der ersten Wicklung 2 aufweist, und dass die zweite Wicklung 4 zweiteilig gewickelt sein kann und einen ersten Teil der zweiten Wicklung 4 und einen zweiten Teil der zweiten Wicklung 4 aufweist, und dass - in Wickelrichtung des Wicklungsdrahtes gesehen - nacheinander der erste Teil der ersten Wicklung 2, der erste Teil der zweiten Wicklung 4, der zweite Teil der ersten Wicklung 2, der zweite Teil der zweiten Wicklung 4 und der dritte Teil der ersten Wicklung 2 gewickelt sind. In diesem Sinne kann insbesondere vorgesehen sein, dass die erste Wicklung 2 wenigstens dreiteilig gewickelt ist, dass die zweite Wicklung 4 wenigstens zweiteilig gewickelt ist, und dass - in Wickelrichtung des Wicklungsdrahtes gesehen - zwischen jeweils zwei Teilen der ersten Wicklung 2 jeweils zumindest ein Teil der zweiten Wicklung 4 angeordnet ist. In diesem Sinne kann die Anzahl der Teile der ersten Wicklung 2 zumindest vier sein und die Anzahl der Teile der zweiten Wicklung 4 der Anzahl der Teile der ersten Wicklung 2 minus eins sein. Ebenso kann vorgesehen sein, dass die erste Wicklung 2 und die zweite Wicklung 4 zweiteilig gewickelt sind, wobei die Anzahl der Teile der ersten Wicklung 2 und der zweiten Wicklung 4 gelich ist. Vorteilhaft ist bei sämltlichen dieser möglichen Ausbildungen mehrteiliger erster Wicklung 2 und zweiter Wicklung 4, dass sowohl die erste Wickelspannung also auch die zweite Wickelspannung in mehrere Teilspannungen und insbesondere im Wesentlichen in vorbestimmbar viele Teilspannungen unterteilt werden kann, womit die entsprechenden Teilspannungen auch bei sehr hohen Stromstärken im Primärleiter 6, beispielsweise über 100000A, besonders gering bleiben können und damit die Kurzschlussfestigkeit der ersten Wicklung 2 und der zweiten Wicklung 4 besonders zuverlässig gewährleistet werden kann. Der Wandler kann dabei beispielsweise zur Anwendung in Kraftwerken vorgesehen sein.

Vorteilhafterweise kann der Teilbereich 32 mit einem besonders geringen magnetischen Widerstand ausgebildet werden, beispielsweise durch Vergrößerung des Querschnittes oder durch Erhöhung der Permeabilität des verwendeten Werkstoffes, damit dieser Bereich einen nur geringen magnetischen Widerstand, also eine hohe magnetische Leitfähigkeit, aufweist. Dadurch kann, insbesondere wenn das erste Kernelement 3 und das zweite Kernelement 5 bereichsweise gemeinsam durch den Teilbereich 32 ausgebildet sind, ein hoher Wirkungsgrad der Wandleranordnung 1 gewährleistet sein.

Gemäß der bevorzugten ersten Ausführungsform ist die erste Wicklung 2 zumindest bereichsweise, insbesondere im Wesentlichen, um den Teilbereich 32 des ersten Magnetkreises 3, insbesondere des ersten Kernelementes 33, gewickelt.

Bei einer bevorzugten zweiten und dritten Ausführungsform - gemäß Fig. 2 und Fig. 3 - ist die erste Wicklung 2 zumindest bereichsweise, insbesondere im Wesentlichen, um den weiteren Teilbereich 34 des ersten Magnetkreises 3, insbesondere des ersten Kernelementes 33, gewickelt.

Bei den bevorzugten Wandleranordnungen 1 kann die erste Wicklung 2 die Hauptwicklung, welche insbesondere mit großer Effizienz arbeitet, und die zweite Wicklung 4 die Kompensationswicklung ausbilden, wobei im Zusammenwirken der ersten Wicklung 2 und der zweiten Wicklung 4, insbesondere die zumindest teilweise Kompensation der ersten Wickelspannung und der zweiten Wickelspannung, die Begrenzung der Spannung unterhalb oder bei der Maximalspannung 76 gewährleistet sein kann.

Die elektromagnetische Wirkung, insbesondere die zweite Wickelspannung, der zweiten Wicklung 4 kompensiert wenigstens teilweise die elektromagnetische Wirkung, insbesondere die erste Wickelspannung, der ersten Wicklung 2. Die elektromagnetische Wirkung, insbesondere die zweite Wickelspannung, der zweiten Wicklung 4 ist im Wesentlichen entgegengesetzt der elektromagnetischen Wirkung, insbesondere der ersten Wickelspannung, der ersten Wicklung 2.

Bevorzugt kann dabei vorgesehen sein, dass bei einem vorgebbaren Stromfluss durch den Primärleiter 6 der erste Magnetkreis 3 zur Ausbildung eines ersten magnetischen Flusses und der zweite Magnetkreis 5 zur Ausbildung eines zum ersten magnetischen Fluss unterschiedlichen zweiten magnetischen Flusses ausgebildet ist. Dabei können sich die erste Wickelspannung und die zweite Wickelspannung bei einem vorgebbaren Stromfluss zueinander unterscheiden.

Vorteilhafterweise kann vorgesehen sein, dass der erste Magnetkreis 3 einen ersten magnetischen Gesamtwiderstand und der zweite Magnetkreis 5 einen zum ersten magnetischen Gesamtwiderstand unterschiedlichen, insbesondere größeren, zweiten magnetischen Gesamtwiderstand aufweist. Der erste Magnetkreis 3 hat zum zweiten Magnetkreis 5 dabei eine unterschiedliche magnetische Arbeitskurve, wobei der zweite Magnetkreis 5 - welcher den Luftspalt 52 aufweist - bei einer anderen Stromstärke im Primärleiter 6 als der luftspaltfreie erste Magnetkreis 3 in Sättigung geht. Vorteilhaft dabei ist, dass derart die Arbeitskurve 7 der Wandleranordnung 1 an die jeweiligen individuellen Anforderungen angepasst werden kann.

Dabei kann vorgesehen sein, dass der erste Magnetkreis 3 eine erste Ersatzpermeabilität und der zweite Magnetkreis 5 eine zur ersten Ersatzpermeabilität unterschiedliche, insbesondere kleinere, zweite Ersatzpermeabilität aufweist. Die Ersatzpermeabilität errechnet sich dabei als gemittelte Permeabilität des jeweiligen Magnetkreises 3, 5 und ist ein Maß für die Leitfähigkeit dieses Magnetkreises 3, 5. Mit steigender Ersatzpermeabilität sinkt - bei gleichbleibenden sonstigen Parametern wie Querschnitt, Länge des Magnetkreises und Breite des Luftspaltes 52 - der magnetische Gesamtwiderstand.

Durch die gegengleiche Überlagerung, insbesondere die teilweise Kompensation, kann die Arbeitskurve 7 der Wandleranordnung 1 den jeweiligen Anforderungen individuell angepasst werden. Dabei kann die an den Anschlüssen 11 anliegende Spannung als Versorgerspannung, als Messspannung und/oder als Regelspannung für elektrische und/oder elektronische Schaltkreise vorgesehen sein, womit die elektrischen und/oder elektronischen Schaltkreise, insbesondere die elektrischen und/oder elektronischen Verbraucher wie beispielsweise Speicherschaltungen, Auswertevorrichtungen und/oder Regelschaltungen, frei von weiteren Versorgungsspannungen und frei von weiteren Anschlussleitungen ausgebildet sein können. Dadurch kann auf weitere Spannungsversorgungen verzichtet werden.

Bei mehrphasigen Primärquellen kann insbesondere an jeder Phase eine Wandleranordnung 1 ausgebildet sein. Bei Drehstrom, welcher üblicherweise drei Phasen, den Nullleiter und gegebenenfalls eine Erdung aufweist, können beispielsweise bevorzugt drei Wandleranordnungen 1 parallel betrieben werden. Die drei Wandleranordnungen 1 können dabei vorteilhafterweise ebenfalls Drehstrom liefern.

Die Fig. 4 zeigt eine vierte bevorzugte Ausführungsform der Wandleranordnung 1 schematisch im Aufriss. Die beiden Magnetkreise, also der erste Magnetkreis 3 und der zweite Magnetkreis 5, sind beabstandet zueinander ausgebildet. Der erste Magnetkreis 3 umfasst das erste Kernelement 33, welches bevorzugt ein oder mehrere erste Werkstoffe umfasst. Der zweite Magnetkreis 5 umfasst das zweite Kernelement 53, welches bevorzugt ein oder mehrere zweite Werkstoffe umfasst. Die erste Wicklung 2 ist das erste Kernelement 33 und die zweite Wicklung 4 ist um das zweite Kernelement 53 gewickelt. Die erste Wicklung 2 und die zweite Wicklung 4 sind in Serie geschaltet, wobei die Spannung der Wandleranordnung 1 an den Anschlüssen 11 anliegt.

Die Fig. 5 zeigt die vierte bevorzugte Ausführungsform geschnitten in der Seitenansicht entlang der in Fig. 4 dargestellten Linie A-A. Der Primärleiter 6 ist entlang der Längserstreckung geschnitten dargestellt. Das erste Kernelement 33 und das zweite Kernelement 53 sind geschnitten dargestellt. Die erste Wicklung 2 und die zweite Wicklung sind insbesondere derart in Serie geschaltet, dass - in einer gemeinsamen Umlaufrichtung 12 des ersten Magnetkreises 3 um die erste Durchführung 31 und des zweiten Magnetkreises 5 um die zweite Durchführung 51 gesehen - bei einer vorgebbaren Stromflussrichtung durch den Primärleiter 6 der Stromfluss der ersten Wicklung 2 um den umwickelten Querschnitt des ersten Magnetkreises 3 in einer ersten Drehrichtung 21 und der Stromfluss der zweiten Wicklung 4 um den umwickelten Querschnitt des zweiten Magnetkreises 5 in einer, der ersten Drehrichtung 21 entgegengesetzten zweiten Drehrichtung 41 erfolgt. Dadurch können sich die elektromagnetischen Wirkungen besonders einfach teilweise gegenseitig kompensieren. Insbesondere können sich dadurch die erste Wickelspannung und die zweite Wickelspannung besonders einfach zumindest teilweise gegenseitig kompensieren.

Bevorzugt kann vorgesehen sein, dass die erste Wicklung 2 und die zweite Wicklung 4 eine gleiche Anzahl von Windungen aufweisen. Dadurch kann die Spannung an den Anschlüssen 11 über große Bereiche der Stromstärke im Primärleiter 6 im Wesentlichen konstant, also im Bereich von plus/minus 15 Prozent um einen Mittelwert der Spannung in diesem Bereich, gehalten werden.

Bei der ersten bis vierten bevorzugten Ausführungsform der Wandleranordnung 1 kann ebenso vorgesehen sein, dass die Anzahl der Windungen der ersten Wicklung 2 größer als die Anzahl der Windungen der zweiten Wicklung 4 ist. Dadurch kann die Spannung ab einer vorgebbaren Stromstärke im Primärleiter 6 wieder abfallend ausgebildet sein, wobei bei größer werdenden Stromstärken als Eingangssignal das als Spannung an den Anschlüssen 11 anliegende Ausgangssignal der Wandleranordnung 1 geringer wird. Dadurch kann gewährleistet sein, dass auch bei sehr hohen Stromstärken im Primärleiter 6, beispielsweise 150000A, insbesondere 300000A, bevorzugt über 500000A keine Spannung oberhalb der vorgebbaren maximalen Spannung auftritt, wobei insbesondere die Sicherheit, also der Abstand von der tatsächlich an den Anschlüssen 11 anliegenden Spannung zur vorgebbaren Maximalspannung 76, mit steigender Stromstärke zunimmt.

Arbeitskurven 7 von erfindungsgemäßen Wandleranordnungen 1 und von herkömmlichen Wandleranordnungen können in einem Spannungs-Stromdiagramm, welches in der Fig. 6 schematisch dargestellt ist, graphisch dargestellt werden. Die Arbeitskurve 7 ist als die zwischen den Anschlüssen 11 anliegende elektrische Spannung über der durch die Durchführungen 31, 51 durchfließende Stromstärke, insbesondere der Stromstärke im Primärleiter 6, definiert.

In der Fig. 6 sind schematisch drei unterschiedliche Arbeitskurven 7 dargestellt, wobei die dargestellten Verläufe der Arbeitskurven 7 der qualitativen Veranschaulichung dienen und stellen, da schematisch, keine quantitativen Zusammenhänge zwischen den Arbeitskurven dar.

Strichliert ist eine als Arbeitskurve 7 ausgebildete Normalarbeitskurve 8 einer herkömmlichen Wandleranordnung dargestellt. Die Normalarbeitskurve 8 steigt mit steigender Stromstärke im Primärleiter 6 stetig an, wobei die elektrische Spannung stetig ansteigt, sodass mit steigendem Stromfluss im Primärleiter auch die von der herkömmlichen Wandleranordnung gelieferte Spannung immer weiter ansteigt und wobei insbesondere bei Kurzschlussströmen im Primärleiter über 1000V Spannung als Ausgangsspannung der Wandleranordnung auftreten können.

Deshalb ist bei derart spannungsversorgten elektrischen und/oder elektronischen Schaltkreisen ein oftmals aufwendiger, kostenintensiver und bauraumverbrauchender Überspannungsschutz üblicherweise unumgänglich.

Die Arbeitskurven 7 können berechnet und/oder gemessen werden, wobei an den Anschlüssen 11 eine konstante ohmsche Last angeschlossen oder bei der Berechnung angenommen ist. Bei der Messung der Arbeitskurve 7 kann die Stromstärke im Primärleiter 6 zwischen beispielsweise OA und beispielsweise 300000A in vorbestimmten Schritten erhöht und die jeweilig zugehörige an den Anschlüssen 11 anliegende Spannung gemessen werden, womit sich Spannungsmesspunkte ergeben. Die Spannungsmesspunkte können im zweidimensionalen Spannungs-Stromdiagramm über der Stromstärke aufgetragen werden, womit die Arbeitskurve 7 der Wandleranordnung 1 ermittelt und/oder angenähert werden kann.

Die in der Fig. 6 schematisch dargestellten Arbeitskurven 7 können vorteilhafterweise in drei Bereiche unterteilt sein. Der erste Arbeitskurvenbereich 71 kann als erster linearer Bereich ausgebildet sein, in welchem die Spannung der Wandleranordnung 1, welche an und zwischen den beiden Anschlüssen 11 anliegt, im Wesentlichen linear proportional, insbesondere steil, mit der Stromstärke ansteigt. Der erste Arbeitskurvenbereich 71 kann beispielsweise im Bereich der Stromstärke zwischen OA und einer vorgebbaren ersten Stromstärke 74, beispielsweise 50A, ausgebildet sein. Dadurch kann die Wandleranordnung 1 bei gebäudeüblichen, bei hallen- und industrieüblichen Stromstärken zuverlässig eingesetzt werden.

Der, an den ersten Arbeitskurvenbereich 71 anschließende, zweite Arbeitskurvenbereich 72 der Arbeitskurven 7 kann als Übergangsbereich ausgebildet sein. Im zweiten Arbeitskurvenbereich 72 kann die Arbeitskurve 7 im Spannungs-Stromdiagramm kontinuierlich abflachen, wobei die Steigung der Arbeitskurve 7 mit ansteigender Stromstärke kontinuierlich abnimmt. Vorteilhafterweise kann der Anstieg der Arbeitskurve 7 am Ende des Übergangsbereiches im Wesentlichen null sein, wobei eine zweite Stromstärke 75 den Übergangsbereich nach oben begrenzen kann. In diesem Bereich beginnt bereits eine starke Kompensation der ersten Wicklungsspannung und der zweiten Wicklungsspannung. Der zweite Arbeitskurvenbereich 72 kann zwischen der ersten Stromstärke 74 und der zweiten Stromstärke, beispielsweise 150A, ausgebildet sein.

Die Nennstromstärke der Wandleranordnung 1, also die Stromstärke im Primärleiter 6 im Normalbetrieb der Wandleranordnung 1, kann beispielsweise im Übergangsbereich angeordnet werden. Dadurch kann die dauerhafte Spannungsversorgung des an die Wandleranordnung 1 angeschlossenen elektrischen und/oder elektronischen Schaltkreises sichergestellt sein, wobei sich die Spannung an den Anschlüssen 11 bei sich ändernden Stromstärken innerhalb des Übergangsbereiches lediglich geringfügig, beispielsweise um maximal plus/minus 40 Prozent, insbesondere um maximal plus/minus 30 Prozent, ändert.

Der, an den zweiten Arbeitskurvenbereich 72 anschließende, dritte Arbeitskurvenbereich 73 kann als Kompensationsbereich bezeichnet werden. In diesem kompensieren sich die erste Wickelspannung und die zweite Wickelspannung derart, dass die Spannung unabhängig der Stromstärke im Primärleiter 6 in diesem Bereich an den Anschlüssen 11 im Wesentlichen weitgehend konstant bleibt, beispielsweise um weniger als plus/minus 25 Prozent, insbesondere um weniger als plus/minus 15 Prozent schwankt. Der dritte Arbeitskurvenbereich 73 kann bevorzugt oberhalb der vorgebbaren zweiten Strömstärke 75 ausgebildet sein.

Insbesondere kann vorgesehen sein, dass die Nennstromstärke im dritten Arbeitskurvenbereich 73 der Arbeitskurven 7 vorgesehen sein, wobei die Nennstromstärke größer als die vorgebbare zweite Stromstärke 75 ist. Derart kann die Spannung der Wandleranordnung 1 an den Anschlüssen 11 bei Schwankungen der Stromstärke um die Nennstromstärke besonders gering schwanken, insbesondere im Wesentlichen konstant sein. Insbesondere sind die erste Stromstärke 74, die zweite Stromstärke 75 und die Nennstromstärke durch die vorgebbaren Parameter der Wandleranordnung 1 bestimmt und können gemeinsam mit der jeweilig zugehörigen Spannung beispielsweise in einem Datenblatt als Kenngrößen der Wandleranordnung 1 vermerkt werden.

Die in der Fig. 6 zeigt zwei unterschiedliche bevorzugte Arbeitskurven 7 der Wandleranordnung 1, welche sich insbesondere im dritten Arbeitskurvenbereich 73 unterscheiden. Die mit einer vollen Linie dargestellte bevorzugte Arbeitskurve 7 zeigt einen im Wesentlichen konstanten Spannungsverlauf im dritten Arbeitskurvenbereich 73.

Die mit einer strichpunktierten Linie dargestellte bevorzugte Arbeitskurve 7 zeigt einen lediglich geringfügigen Anstieg bis zu einem Maximalwert, welcher bevorzugt der Maximalspannung 76 der Wandleranordnung 1 entsprechen kann, und einen anschließenden Abfall der Spannung mit steigender Stromstärke im Primärleiter 6, wobei der Abfall lediglich mit geringer Neigung ausgebildet sein kann und wobei die Spannung auf einen vorbestimmbaren Minimalwert der Spannung oder bis auf Null Volt abfallen.

In diesem Zusammenhang kann vorgesehen sein, dass die Spannung der Wandleranordnung 1 bei sehr hohen Stromstärken, beispielsweise bei über 20000A, in Richtung Null Volt sinkt. Dadurch kann der Sicherheitsabstand der Spannung zur Maximalspannung 76 der Wandleranordnung 1 erhöht werden.

Insbesondere kann der Maximalwert und/oder die Maximalspannung 76 durch die Wandleranordnung 1 vorgebbar ausgebildet sein und beispielsweise in etwa 35V, insbesondere in etwa 25V, bevorzugt in etwa 15V betragen. Derart kann eine Spannungsüberlastung der an die Anschlüsse 11 der Wandleranordnung 1 angeschlossenen elektrischen und/oder elektronischen Schaltkreis wirkungsvoll vermieden werden. Damit können die elektrischen und/oder elektronischen Schaltkreise, insbesondere die Verbraucher, bei stark schwankendem Stromfluss im Primärleiter 6 mit einer begrenzt, insbesondere gering, schwankenden Spannung versorgt und/oder angesteuert werden.

In anderen vorteilhaften Ausbildungen der Arbeitskurve kann der Maximalwert und/oder die Maximalspannung 76 bis zu einer vorbestimmten Stromstärken gültig sein, wobei die vorbestimmte Stromstärke zwischen 3000A und 50000A, insbesondere zwischen 5000 A und 30000A, bevorzugt zwischen 10000A und 20000A, oder wobei die vorbestimmte Stromstärke dem 20fachen bis 300fachem, insbesondere dem 35fachen bis 200fachem, bevorzugt dem 50fachen bis 150fachem der Nennstromstärke betragen kann und wobei die Spannung oberhalb der vorgebbaren Stromstärke über die Maximalspannung 76 ansteigt.

Vorteilhaft dabei ist, dass die Spannung bis zur vorbestimmten Stromstärke einen besonders konstanten Verlauf aufweisen kann und somit über einen breiten Stromstärkenbereich eine im Wesentlichen konstante Spannung an der Wandleranordnung 1 anliegt. Der Bereich, in welchem die Spannung über die Maximalspannung 76 anzusteigen beginnt ist dabei in einem vom Stromstärkenbereich beim Nennstrom weit entfernten Stromstärkenbereich und kann mit einfachen Mitteln, insbesondere mit einem Stromabschalter, im Primärleiter 6 verhindert werden kann.

Die von der Wandleranordnung 1 erzeugte Spannung, also das Ausgangssignal der Wandleranordnung 1, kann insbesondere als proportionales Messsignal verwendet werden und einen Rückschluss auf die Stromstärke, also auf das Eingangssignal der Wandleranordnung 1, ermöglichen, wobei gleichzeitig die Spannung - und damit das maximale Messsignal - nach oben beschränkt ist und somit gewährleistet sein kann, dass die nachgeschaltete Auswertevorrichtung nicht durch ein zu großes Messsignal - beispielsweise bei einem Kurzschlussstrom im Primärleiter 6 - beschädigt wird. Dazu kann bevorzugt die Nennstromstärke im ersten Arbeitskurvenbereich 71 der Arbeitskurve 7 der Wandleranordnung 1 vorgesehen sein.

Vorteilhaft dabei ist, dass sofern die von der Wandleranordnung 1 gelieferte Spannung bei der vorgebbaren Stromstärke über die Maximalspannung 76 ansteigt, dass diese Spannung als Auslösespannung für weitere elektrische Bauteile, insbesondere den Spannungsabschalter, verwendetet werden kann. Dadurch kann durch die Wandleranordnung 1 sowohl eine im Wesentlichen konstante Spannung im Stromstärkenbereich unterhalb der vorgebbaren Stromstärke und eine Netzabtrennung des Primärleiters 6 bei der vorgebbaren Stromstärke gewährleistet sein. Dadurch kann die Wandleranordnung 1 zwei Funktionen übernehmen, womit zusätzliche Bauteile und Bauraum eingespart werden können.

Mittels der Anzahl der Windungen der ersten Wicklung 2, der zweiten Wicklung 4, des ersten magnetischen Gesamtwiderstandes, des zweiten magnetischen Gesamtwiderstandes, der ersten Ersatzpermeabilität und/oder der zweiten Ersatzpermeabilität, welche vorzugsweise vorgebbare Parameter der Wandleranordnung 1 ausbilden können, kann die Arbeitskurve 7, insbesondere die Spannung bei der ersten Stromstärke 74, die Spannung bei der zweiten Stromstärke 75 und die Spannung bei der Nennstromstärke vorbestimmt werden. Darüber hinaus kann der Verlauf der Arbeitskurve 7 im ersten Arbeitskurvenbereich 71, im zweiten Arbeitskurvenbereich 72 und im dritten Arbeitskurvenbereich 73 der Arbeitskurve 7 vorgegeben werden, wodurch die Übertragungsfunktion der Wandleranordnung 1 - bei konstanter Frequenz, insbesondere 50Hz, des Wechselstromes des Stromflusses im Primärleiter 6 und bei konstanter, insbesondere ohmscher Last, an den Anschlüssen 11 - vollständig und im Wesentlichen eindeutig vorbestimmbar sein kann und wobei die Arbeitskurve 7 an die individuellen Erfordernisse des Primärleiters 6, der Nennstromstärke, und/oder des elektrischen und/oder elektronischen Schaltkreises einfach und flexibel angepasst werden.

Zur einfachen Kompensation der elektromagnetischen Wirkungen der ersten Wicklung 2 und der zweiten Wicklung 4 kann besonders bevorzugt vorgesehen sein, dass - in einer gemeinsamen Umlaufrichtung 12 des ersten Magnetkreises 3 um die erste Durchführung 31 und des zweiten Magnetkreises 5 um die zweite Durchführung 51 gesehen - bei einer vorgebbaren Stromflussrichtung durch den Primärleiter 6 der Stromfluss der ersten Wicklung 2 um den umwickelten Querschnitt des ersten Magnetkreises 3 in einer ersten Drehrichtung 21 und der Stromfluss der zweiten Wicklung 4 um den umwickelten Querschnitt des zweiten Magnetkreises 5 in einer, der ersten Drehrichtung 21 entgegengesetzten zweiten Drehrichtung 41 erfolgt.

Die Wandleranordnung 1 kann bei einer bevorzugten Ausführungsform von einem elektrischen und/oder elektronischen Schaltkreis, insbesondere Schaltkreis umfassend einen Energiespeicher, umfasst sein, wobei der Schaltkreis mit der Wandleranordnung 1 spannungswirkverbunden, insbesondere spannungsversorgt, ist. Dabei können bevorzugt die Anschlüsse 11 mit dem elektrischen und/oder elektronischen Schaltkreis wirkverbunden sein. Vorteilhafterweise kann der elektrische und/oder elektronische Schaltkreis von einem Schaltgerät, insbesondere das Speicherschaltgerät zur Unterbrechung eines Stromflusses, umfasst sein. Dadurch kann das Schaltgerät einfach und ohne weiter Überspannungsschutzeinrichtungen ausgebildet sein, wobei die Versorgungsspannung und/oder die Messspannung des Schaltgerätes aus dem Feld des stromdurchflossenen Primärleiters 6 erzeugt wird.

## Patentansprüche

1. Wandleranordnung (1) zur Erzeugung einer elektrischen Spannung für einen elektrischen und/oder elektronischen Schaltkreis aus dem Feld eines stromdurchflossenen Primärleiters (6), umfassend eine erste Wicklung (2) um einen ersten Magnetkreis (3), wobei der erste Magnetkreis (3) eine erste Durchführung (31) für den Primärleiter (6) aufweist, wobei der erste Magnetkreis (3) luftspaltfrei ausgebildet ist, und wobei in der ersten Wicklung (2) eine erste Wickelspannung ausbildbar ist, wobei eine zweite Wicklung (4) um einen zweiten Magnetkreis (5) in Serie zu der ersten Wicklung (2) geschaltet ist, wobei der zweite Magnetkreis (5) eine zweite Durchführung (51) für den Primärleiter (6) aufweist, wobei der zweite Magnetkreis (5) wenigstens einen Luftspalt (52) umfasst, wobei der zweite Magnetkreis (5) wenigstens ein zweites Kernelement (53) umfasst, wobei in der zweiten Wicklung (4) eine zweite Wickelspannung ausbildbar ist, wobei bei einem vorgebbaren Stromfluss durch den Primärleiter (6) die erste Wickelspannung und die zweite Wickelspannung zur teilweisen gegenseitigen Kompensierung derart ausgebildet sind, dass die elektrische Spannung unterhalb einer vorgebbaren ersten Stromstärke (74) im Primärleiter (6) stetig proportional mit steigender Stromstärke ansteigt und ab einer vorgebbaren zweiten Stromstärke (75), welche zweite Stromstärke (75) größer als die erste Stromstärke (74) ist, bei weiterem stetigen Anstieg der Stromstärke im Primärleiter (6) höchstens geringfügig ansteigt, wobei - in einem vorbestimmbaren elektrischen Umlaufsinn gesehen - die erste Wickelspannung positiv ist und die zweite Wickelspannung negativ ist und wobei die elektrische Spannung die Summenspannung der positiven ersten Wickelspannung und der negativen zweiten Wickelspannung ist, wobei der erste Magnetkreis (3) wenigstens ein erstes Kernelement (33) umfasst, welches erstes Kernelement (33) zum luftspaltfreien Umschließen des Primärleiters (6) ausgebildet ist, **dadurch gekennzeichnet, dass** das erste Kernelement (33) zumindest ein Kernblech umfasst, und dass eine magnetische Vorzugsrichtung des Kernbleches mit einer Umlaufrichtung des ersten Kernelementes (33) um die erste Durchführung (31) übereinstimmen.

2. Wandleranordnung (1) nach Anspruch 1, **dadurch gekennzeichnet, dass** die elektrische Spannung ab einer vorgebbaren zweiten Stromstärke (75) bei weiterem stetigen Anstieg der Stromstärke im Primärleiter (6) im Wesentlichen konstant bleibt und/oder kleiner wird.

3. Wandleranordnung (1) nach Anspruch 1 oder 2, **dadurch gekennzeichnet, dass** die erste Wickelspannung und die zweite Wickelspannung einander derart kompensieren, dass die elektrische Spannung bei sich ändernder Stromstärke im Primärleiter (6) oberhalb der zweiten Stromstärke (75) um weniger als plus/minus 25 Prozent schwankt.

4. Wandleranordnung nach Anspruch 1, 2 oder 3, **dadurch gekennzeichnet, dass** die Wandleranordnung (1) derart ausgebildet ist, dass bei einer Nennstromstärke der Stromstärke im Primärleiter (6) eine vorgebbare Nennspannung der elektrischen Spannung an Anschlüssen (11) der Wandleranordnung (1) anliegt, und dass die Maximalspannung (76) dem 1,1 fachem bis 5fachem, bevorzugt dem 1,2fachen bis 3fachen, besonders bevorzugt dem 1,3fachen bis 2fachen, der Nennspannung ist, und dass das Verhältnis der elektrischen Nennspannung zur elektrischen Maximalspannung (76) der elektrischen Spannung mittels der Größe des Luftspaltes (52) und mittels des Verhältnisses einer ersten Windungszahl der ersten Wicklung (2) zu einer zweiten Windungszahl der zweiten Wicklung (4) vorbestimmt ist.

5. Wandleranordnung nach einem der Ansprüche 1 bis 4, **dadurch gekennzeichnet, dass** die Wandleranordnung (1) zum Normalbetrieb der Wandleranordnung (1) bei einer Nennstromstärke im Primärleiter (6) ausgebildet ist, welche Nennstromstärke größer als die erste Stromstärke (74), insbesondere größer als die zweite Stromstärke (75), ist.

6. Wandleranordnung nach einem der Ansprüche 1 bis 5, **dadurch gekennzeichnet, dass** der erste Magnetkreis (3) einen ersten magnetischen Gesamtwiderstand und der zweite Magnetkreis (5) einen zum ersten magnetischen Gesamtwiderstand unterschiedlichen, insbesondere größeren, zweiten magnetischen Gesamtwiderstand aufweist.

7. Wandleranordnung nach einem der Ansprüche 1 bis 6, **dadurch gekennzeichnet, dass** das zweite Kernelement (53) den wenigstens einen Luftspalt (52) aufweist.

8. Wandleranordnung nach einem der Ansprüche 1 bis 7, **dadurch gekennzeichnet, dass** der Luftspalt (52) zwischen 0,01mm und 0,5mm breit ausgebildet ist.

9. Wandleranordnung nach einem der Ansprüche 1 bis 8, **dadurch gekennzeichnet, dass** der zweite Magnetkreis (5) beabstandet zum ersten Magnetkreis (3) angeordnet ist.

10. Wandleranordnung nach einem der Ansprüche 1 bis 8, **dadurch gekennzeichnet, dass** der zweite Magnetkreis (5) einen Teilbereich (32) des ersten Magnetkreises (3) und ein mit dem Teilbereich (32) des ersten Magnetkreises (3) wirkverbundenes Teilsegment (54) umfasst, und dass die erste Durchführung (31) und die zweite Durchführung (51) als eine gemeinsame Durchführung für den Primärleiter (6) ausgebildet sind.

11. Wandleranordnung nach einem der Ansprüche 1 bis 10, **dadurch gekennzeichnet, dass** das Verhältnis einer ersten Windungszahl der ersten Wicklung (2) zu einer zweiten Windungszahl der zweiten Wicklung (4) zwischen 2:1 und 1:2 beträgt.

12. Wandleranordnung nach einem der Ansprüche 1 bis 11, **dadurch gekennzeichnet, dass** die erste Wicklung (2) und/oder die zweite Wicklung (4) mehrteilig gewickelt ist.

13. Wandleranordnung nach Anspruch 12, **dadurch gekennzeichnet, dass** die erste Wicklung (2) wenigstens zweiteilig gewickelt ist, und dass die zweite Wicklung (4) - in Wickelrichtung des Wicklungsdrahtes gesehen - zwischen den Teilen der ersten Wicklung (2) angeordnet ist.

14. Elektrischer und/oder elektronischer Schaltkreis, insbesondere Schaltkreis umfassend einen Energiespeicher, **dadurch gekennzeichnet, dass** der Schaltkreis eine Wandleranordnung (1) gemäß einem der Ansprüche 1 bis 13 umfasst, und dass der Schaltkreis mit der Wandleranordnung (1) elektrisch spannungsversorgt ist.

15. Elektrischer und/oder elektronischer Schaltkreis nach Anspruch 14, **dadurch gekennzeichnet, dass** die elektrische Spannung weiters als Messspannung und/oder als Regelspannung für den elektrischen und/oder elektronischen Schaltkreise vorgesehen ist.

16. Schaltgerät, insbesondere Speicherschaltgerät, zur Unterbrechung eines Stromflusses, **dadurch gekennzeichnet, dass** das Schaltgerät einen elektrischen und/oder elektronischen Schaltkreis nach Anspruch 14 oder 15 umfasst.

## Claims

1. Converter arrangement (1) for generating an electrical voltage for an electrical and/or electronic circuit from the field of a primary conductor (6) through which current flows, said converter arrangement comprising a first winding (2) around a first magnetic circuit (3), wherein the first magnetic circuit (3) has a first bushing (31) for the primary conductor (6), wherein the first magnetic circuit (3) is configured free of air gaps, and wherein a first winding voltage can be formed in the first winding (2), wherein a second winding (4) around a second magnetic circuit (5) is connected in series with the first winding (2), wherein the second magnetic circuit (5) has a second bushing (51) for the primary conductor (6), wherein the second magnetic circuit (5) comprises at least one air gap (52), wherein the second magnetic circuit (5) comprises at least one second core element (53), wherein a second winding voltage can be formed in the second winding (4), wherein, when a predefinable current flows through the primary conductor (6), the first winding voltage and the second winding voltage are configured to partially compensate one another such that, below a predefinable first current intensity (74) in the primary conductor (6), the electrical voltage steadily increases in a manner proportional to the increasing current intensity and, with effect from a predefinable second current intensity (75), which second current intensity (75) is greater than the first current intensity (74), the electrical voltage increases at most slightly as the current intensity in the primary conductor (6) continues to increase steadily, wherein, as seen in a predeterminable electrical rotation direction, the first winding voltage is positive and the second winding voltage is negative, and wherein the electrical voltage is the sum voltage of the positive first winding voltage and of the negative second winding voltage, wherein the first magnetic circuit (3) comprises at least one first core element (33), which first core element (33) is configured to enclose the primary conductor (6) in a manner free of air gaps, **characterized in that** the first core element (33) comprises at least one core plate, and **in that** a preferred magnetic direction of the core plate coincides with a direction of rotation of the first core element (33) around the first bushing (31).

2. Converter arrangement (1) according to claim 1, **characterized in that**, with effect from a predefinable second current intensity (75), the electrical voltage remains substantially constant and/or becomes smaller as the current intensity in the primary conductor (6) continues to increase steadily.

3. Converter arrangement (1) according to claim 1 or 2, **characterized in that** the first winding voltage and the second winding voltage compensate one another such that, as the current intensity in the primary conductor (6) varies above the second current intensity (75), the electrical voltage fluctuates by less than plus/minus 25 percent.

4. Converter arrangement according to claim 1, 2 or 3, **characterized in that** the converter arrangement (1) is configured such that, at a nominal current intensity of the current intensity in the primary conductor (6), a predefinable nominal voltage of the electrical voltage is applied to terminals (11) of the converter arrangement (1), and **in that** the maximum voltage (76) is 1.1 times to 5 times, preferably 1.2 times to 3 times, particularly preferably 1.3 times to 2 times the nominal voltage, and **in that** the ratio of the nominal electrical voltage to the maximum electrical voltage (76) of the electrical voltage is predetermined by the size of the air gap (52) and by the ratio of a first number of turns of the first winding (2) to a second number of turns of the second winding (4).

5. Converter arrangement according to one of claims 1 to 4, **characterized in that** the converter arrangement (1) is configured for normal operation of the converter arrangement (1) at a nominal current intensity in the primary conductor (6), which nominal current intensity is greater than the first current intensity (74), in particular greater than the second current intensity (75).

6. Converter arrangement according to one of claims 1 to 5, **characterized in that** the first magnetic circuit (3) has a first magnetic total resistance and the second magnetic circuit (5) has a second magnetic total resistance which differs from, in particular is greater than, the first magnetic total resistance.

7. Converter arrangement according to one of claims 1 to 6, **characterized in that** the second core element (53) has the at least one air gap (52).

8. Converter arrangement according to one of claims 1 to 7, **characterized in that** the air gap (52) is configured with a width of between 0.01 mm and 0.5 mm.

9. Converter arrangement according to one of claims 1 to 8, **characterized in that** the second magnetic circuit (5) is arranged at a distance from the first magnetic circuit (3).

10. Converter arrangement according to one of claims 1 to 8, **characterized in that** the second magnetic circuit (5) comprises a portion (32) of the first magnetic circuit (3) and a sub-segment (54) operatively connected to the portion (32) of the first magnetic circuit (3), and **in that** the first bushing (31) and the second bushing (51) are configured as a common bushing for the primary conductor (6).

11. Converter arrangement according to one of claims 1 to 10, **characterized in that** the ratio of a first number of turns of the first winding (2) to a second number of turns of the second winding (4) is between 2:1 and 1:2.

12. Converter arrangement according to one of claims 1 to 11, **characterized in that** the first winding (2) and/or the second winding (4) is wound in multiple parts.

13. Converter arrangement according to claim 12, **characterized in that** the first winding (2) is wound in at least two parts, and **in that** the second winding (4), as viewed in the winding direction of the winding wire, is arranged between the two parts of the first winding (2).

14. Electrical and/or electronic circuit, in particular a circuit comprising an energy store, **characterized in that** the circuit comprises a converter arrangement (1) according to one of claims 1 to 13, and **in that** the circuit is electrically supplied with voltage by the converter arrangement (1).

15. Electrical and/or electronic circuit according to claim 14, **characterized in that** the electrical voltage is additionally provided as a measuring voltage and/or as a control voltage for the electrical and/or electronic circuits.

16. Switching device, in particular a store switching device, for interrupting a current flow, **characterized in that** the switching device comprises an electrical and/or electronic circuit according to claim 14 or 15.

## Revendications

1. Ensemble convertisseur (1) pour générer une tension électrique pour un circuit électrique et/ou électronique à partir du champ d'un conducteur primaire (6) parcouru par un courant, comprenant un premier enroulement (2) autour d'un premier circuit magnétique (3), dans lequel le premier circuit magnétique (3) présente une première traversée (31) pour le conducteur primaire (6), dans lequel le premier circuit magnétique (3) est formé sans entrefer, et dans lequel une première tension d'enroulement peut être formée dans le premier enroulement (2), dans lequel un deuxième enroulement (4) est couplé en série avec le premier enroulement (2) autour d'un deuxième circuit magnétique (5), dans lequel le deuxième circuit magnétique (5) présente une deuxième traversée (51) pour le conducteur primaire (6), dans lequel le deuxième circuit magnétique (5) comprend au moins un entrefer (52), dans lequel le deuxième circuit magnétique (5) comprend au moins un deuxième élément de noyau (53), dans lequel une deuxième tension d'enroulement peut être formée dans le deuxième enroulement (4), dans lequel la première tension d'enroulement et la deuxième tension d'enroulement sont formées pour se compenser mutuellement partiellement dans le cas d'un flux de courant prédéfinissable à travers le conducteur primaire (6) de telle sorte que, au-dessous d'une première intensité de courant (74) prédéfinissable, la tension électrique dans le conducteur primaire (6) augmente de façon continue et proportionnelle à l'augmentation de l'intensité de courant et, à partir d'une deuxième intensité de courant (75) prédéfinissable, laquelle deuxième intensité de courant (75) est supérieure à la première intensité de courant (74), augmente tout au plus légèrement en cas de nouvelle augmentation continue de l'intensité de courant dans le conducteur primaire (6), dans lequel - vue dans un sens de rotation électrique prédéterminable - la première tension d'enroulement est positive et la deuxième tension d'enroulement est négative, et dans lequel la tension électrique est la tension somme de la première tension d'enroulement positive et de la deuxième tension d'enroulement négative, dans lequel le premier circuit magnétique (3) comprend au moins un premier élément de noyau (33), lequel premier élément de noyau (33) est formé pour entourer sans entrefer le conducteur primaire (6), **caractérisé en ce que** le premier élément de noyau (33) comprend au moins une tôle de noyau, et que la direction magnétique préférentielle de la tôle de noyau coïncide avec une direction de rotation du premier élément de noyau (33) autour de la première traversée (31).

2. Ensemble convertisseur (1) selon la revendication 1, **caractérisé en ce que** la tension électrique reste sensiblement constante et/ou diminue à partir d'une deuxième intensité de courant (75) prédéfinissable en cas de nouvelle augmentation continue de l'intensité de courant dans le conducteur primaire (6).

3. Ensemble convertisseur (1) selon la revendication 1 ou 2, **caractérisé en ce que** la première tension d'enroulement et la deuxième tension d'enroulement se compensent mutuellement de telle sorte que la tension électrique dans le conducteur primaire (6) varie de moins de plus ou moins 25 % au-dessus de la deuxième intensité de courant (75) lorsque l'intensité de courant dans le conducteur primaire (6) change.

4. Ensemble convertisseur selon la revendication 1, 2 ou 3, **caractérisé en ce que** l'ensemble convertisseur (1) est formé de telle sorte que, pour une intensité de courant nominale de l'intensité de courant dans le conducteur primaire (6), une tension nominale prédéfinissable de la tension électrique est présente aux bornes (11) de l'ensemble convertisseur (1), et que la tension maximale (76) est 1,1 à 5 fois, de préférence 1,2 à 3 fois, particulièrement de préférence 1,3 à 2 fois la tension nominale, et que le rapport de la tension électrique nominale sur la tension électrique maximale (76) de la tension électrique est prédéterminé au moyen de la taille de l'entrefer (52) et au moyen du rapport d'un premier nombre de spires du premier enroulement (2) sur un deuxième nombre de spires du deuxième enroulement (4).

5. Ensemble convertisseur selon l'une des revendications 1 à 4, **caractérisé en ce que** l'ensemble convertisseur (1) est formé pour le fonctionnement normal de l'ensemble convertisseur (1) à une intensité de courant nominale dans le conducteur primaire (6), laquelle intensité de courant nominale est supérieure à la première intensité de courant (74), en particulier supérieure à la deuxième intensité de courant (75).

6. Ensemble convertisseur selon l'une des revendications 1 à 5, **caractérisé en ce que** le premier circuit magnétique (3) présente une première résistance magnétique totale et le deuxième circuit magnétique (5) une deuxième résistance magnétique totale qui est différente de la première résistance magnétique totale, en particulier lui est supérieure.

7. Ensemble convertisseur selon l'une des revendications 1 à 6, **caractérisé en ce que** le deuxième élément de noyau (53) présente ledit au moins un entrefer (52).

8. Ensemble convertisseur selon l'une des revendications 1 à 7, **caractérisé en ce que** l'entrefer (52) est formé avec une largeur comprise entre 0,01 mm et 0,5 mm.

9. Ensemble convertisseur selon l'une des revendications 1 à 8, **caractérisé en ce que** le deuxième circuit magnétique (5) est disposé à une certaine distance du premier circuit magnétique (3).

10. Ensemble convertisseur selon l'une des revendications 1 à 8, **caractérisé en ce que** le deuxième circuit magnétique (5) comprend une zone partielle (32) du premier circuit magnétique (3) et un segment partiel (54) en liaison fonctionnelle avec la zone partielle (32) du premier circuit magnétique (3), et que la première traversée (31) et la deuxième traversée (51) sont formées comme une traversée commune pour le conducteur primaire (6).

11. Ensemble convertisseur selon l'une des revendications 1 à 10, **caractérisé en ce que** le rapport d'un premier nombre de spires du premier enroulement (2) sur un deuxième nombre de spires du deuxième enroulement (4) est compris entre 2:1 et 1:2.

12. Ensemble convertisseur selon l'une des revendications 1 à 11, **caractérisé en ce que** le premier enroulement (2) et/ou le deuxième enroulement (4) sont enroulés en plusieurs parties.

13. Ensemble convertisseur selon la revendication 12, **caractérisé en ce que** le premier enroulement (2) est enroulé en au moins deux parties, et que le deuxième enroulement (4) - vu dans le sens d'enroulement du fil d'enroulement - est disposé entre les parties du premier enroulement (2).

14. Circuit électrique et/ou électronique, en particulier circuit comprenant un accumulateur d'énergie, **caractérisé en ce que** le circuit comprend un ensemble convertisseur (1) selon l'une des revendications 1 à 13, et que le circuit est alimenté électriquement en tension par l'ensemble convertisseur (1).

15. Circuit électrique et/ou électronique selon la revendication 14, **caractérisé en ce que** la tension électrique est en outre prévue comme tension de mesure et/ou comme tension de régulation pour le circuit électrique et/ou électronique.

16. Dispositif de commutation, en particulier dispositif de commutation d'accumulateur, pour interrompre un flux de courant, **caractérisé en ce que** le dispositif de commutation comprend un circuit électrique et/ou électronique selon la revendication 14 ou 15.
